# EUROPÄISCHE PATENTSCHRIFT

(11) **EP 1 868 858 B1**
(45) Veröffentlichungstag und Bekanntmachung des Hinweises auf die Patenterteilung: **10.09.2008**
(21) Anmeldenummer: 06723487.2
(22) Anmeldetag: 17.03.2006
(51) Int. Cl.: B60R 25/04

(54) **VORRICHTUNG ZUM STARTEN UND ZUM BETRIEB EINES MOTORS IN EINEM KRAFTFAHRZEUG**
DEVICE FOR STARTING AND OPERATING AN ENGINE IN A MOTOR VEHICLE
DISPOSITIF POUR FAIRE DEMARRER ET FAIRE FONCTIONNER UN MOTEUR DANS UN VEHICULE A MOTEUR

(30) Priorität: 12.04.2005 DE 102005016649
(43) Veröffentlichungstag der Anmeldung: 26.12.2007
(73) Patentinhaber: Huf Hülsbeck & Fürst GmbH & Co. KG, 42551 Velbert (DE)
(72) Erfinder: PITSCHKE, Andre, 42119 Wuppertal (DE)
(74) Vertreter: Mentzel, Norbert
(86) Internationale Anmeldenummer: PCT/EP2006/002443
(87) Internationale Veröffentlichungsnummer: WO 2006/108485

(56) Entgegenhaltungen:
- EP-A- 1 020 592
- EP-A- 1 462 325
- EP-A- 1 465 223
- JP-A- 2004 058 731
- US-B1- 6 776 016

## Beschreibung

Die Erfindung richtet sich auf eine Vorrichtung der im Oberbegriff des Anspruches 1 angegebenen Art. Als Identifikationsgeber, der nachfolgend kurz "ID-Geber" bezeichnet werden soll, kann ein elektronischer Schlüssel oder eine Identifikationskarte dienen, die auch als "Smart Card" bezeichnet wird.

Es kommt darauf an, den ID-Geber in der ortsfesten Aufnahme des Kraftfahrzeugs in seiner ordnungsgemäßen Einstecklage zu sichern. Dazu dient ein in der Aufnahme angeordneter zweiarmiger Hebel, der einen Haltearm und einen Steuerarm besitzt. Der Haltearm verläuft im Wesentlichen in Einsteckrichtung des ID-Gebers und besitzt ein Gegenrastmittel, welches in der ordnungsgemäßen Einstecklage in das Rastmittel in dem eingesteckten ID-Geber eingreift und so den ID-Geber in der Aufnahme festhält. Demgegenüber hat der Steuerarm eine Steuerstelle und eine Sperrstelle. Die Steuerstelle dient für eine Schwenkbewegung des Hebels im Eingriffssinne der Rast- und Gegenrastmittel. Die Sperrstelle wirkt dagegen mit einem Sperrmittel zusammen, welches den ID-Geber in dessen Einstecklage sichert.

Aus der EP 1 020 592 B1 ist eine derartige Vorrichtung bekannt. Die Aufnahme befindet sich im Inneren eines Drehknopfs, der zum Zünden und Starten eine Axialbewegung ausführt. In der Aufnahme befinden sich zwei zweiarmige Hebel, deren beide Arme gestreckt verlaufen. Sowohl der Haltearm als auch der Steuerarm erstrecken sich im Wesentlichen in Einsteckrichtung des ID-Gebers. Bei der Axialbewegung des Drehknopfes vollführen auch die beiden Hebel eine Axialbewegung, wodurch die am Ende des Steuerarms befindlichen Steuerstellen auf ortsfeste axiale Vorsprünge im Inneren der Aufnahme auffahren. Das verursacht zunächst eine Schwenkbewegung der Hebel. Die ortsfesten axialen Vorsprünge dienen zugleich als Sperrmittel, um die Einstecklage des ID-Gebers zu sichern. Die gegeneinander geschwenkten Haltearme besitzen als Gegenrastmittel fungierende Hakenenden, die in entsprechende, als Rastmittel dienende Vertiefungen in der Seitenwand des ID-Gebers einfahren. Der Nachteil dieser bekannten Vorrichtung liegt in ihrer verhältnismäßig großen axialen Bautiefe. Dazu ist ein entsprechend großer Platz im Kraftfahrzeug erforderlich, der somit für andere wichtige Bauteile nicht mehr zur Verfügung steht.

Das Dokument JP-A- 2004/058731 offenbart ebenfalls ein System gemäß dem Oberbegriff des Anspruchs 1.

Der Erfindung liegt die Aufgabe zugrunde, eine zuverlässige Vorrichtung der im Oberbegriff des Anspruches 1 genannten Art zu entwickeln, die platzsparend ausgebildet ist. Dies wird durch die im Anspruch 1 angeführten Maßnahmen erreicht, denen folgende besondere Bedeutung zukommt.

Durch die Ausbildung des Hebels als Winkelhebel wird bei der Erfindung bereits eine kurze axiale Bautiefe erreicht. Diese geringe Bautiefe ergibt sich aber auch deswegen, weil ortsfeste Steuermittel für die Schwenkbewegung des Winkelhebels überflüssig sind; das Einsteckende des ID-Gebers fungiert nämlich als eine Gegensteuerstelle für den Steuerarm des Winkelhebels. Beim Einstecken des ID-Gebers stößt diese Gegensteuerstelle an die Steuerstelle vom Steuerarm und löst so zwangsweise eine Schwenkbewegung aus. Der ID-Geber selbst erzeugt so die Verschwenkung des Winkelhebels im Eingriffssinne der Rast- und Gegenrastmittel. Schließlich wird die axiale Bautiefe auch nicht durch das Sperrmittel vergeudet, weil dieses quer zur Schwenkebene des Steuerarms zwischen seinen beiden Stellungen beweglich ist, nämlich einer Sperrstellung, wo das Sperrmittel an der Sperrstelle vom Steuerarm angreift, und einer Freigabestellung, wo das Sperrmittel die Sperrstelle freigibt.

Weitere Maßnahmen und Vorteile der Erfindung ergeben sich aus den Unteransprüchen, der nachfolgenden Beschreibung und den Zeichnungen. In den Zeichnungen ist ein Ausführungsbeispiel der Erfindung lediglich anhand der wesentlichsten Bauteile dargestellt. Es zeigen:
- Fig. 1: die Innenbauteile einer ortsfest im Kraftfahrzeug angeordneten Aufnahme zu Beginn der Einsteckphase eines ID-Gebers,
- Fig. 2,: in einer zu Fig. 1 analogen Darstellung, eine mittlere Einsteckphase des ID-Gebers in die Aufnahme,
- Fig. 3: die in Fig. 1 gezeigten Bauteile in einer Sperrstellung, wo die endgültige ordnungsgemäße Einstecklage des ID-Gebers gesichert ist, und
- Fig. 4: eine Rückansicht der in Fig. 3 gezeigten Bauteile.

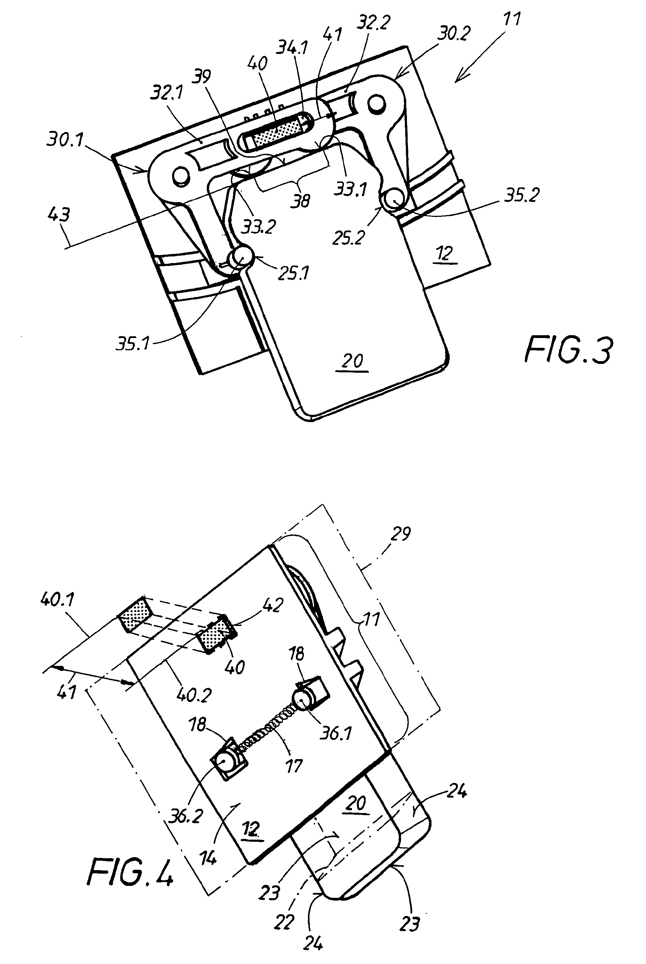

Im Besitz der berechtigten Person befindet sich ein loser ID-Geber, der im Gebrauchsfall in eine ortsfeste, in den Zeichnungen nur in ihrer Lage angedeutete Aufnahme 10 im Sinne des Pfeils 21 eingesteckt wird. Von der Aufnahme 10 sind lediglich jene inneren Bauteile 11 gezeigt, die mit dem ID-Geber 20 zusammenwirken und zur Begrenzung der Aufnahme 10 an ihrer einen Seite dienen. Wie in Fig. 4 durch Punktlinien verdeutlicht ist, besitzt der ID-Geber im Wesentlichen einen Rechteckquerschnitt 22 mit jeweils zwei einander gegenüberliegenden Breitseiten 23 und zwei Schmalseiten 24. Die Schmalseiten 24 bestimmen in Einsteckrichtung weisende Seitenwände des ID-Gebers 20, die mit zueinander gegenüberliegenden Rastmitteln 25.1, 25.2 versehen sind. Diese Rastmittel bestehen im vorliegenden Fall aus Vertiefungen 25.1, 25.2.

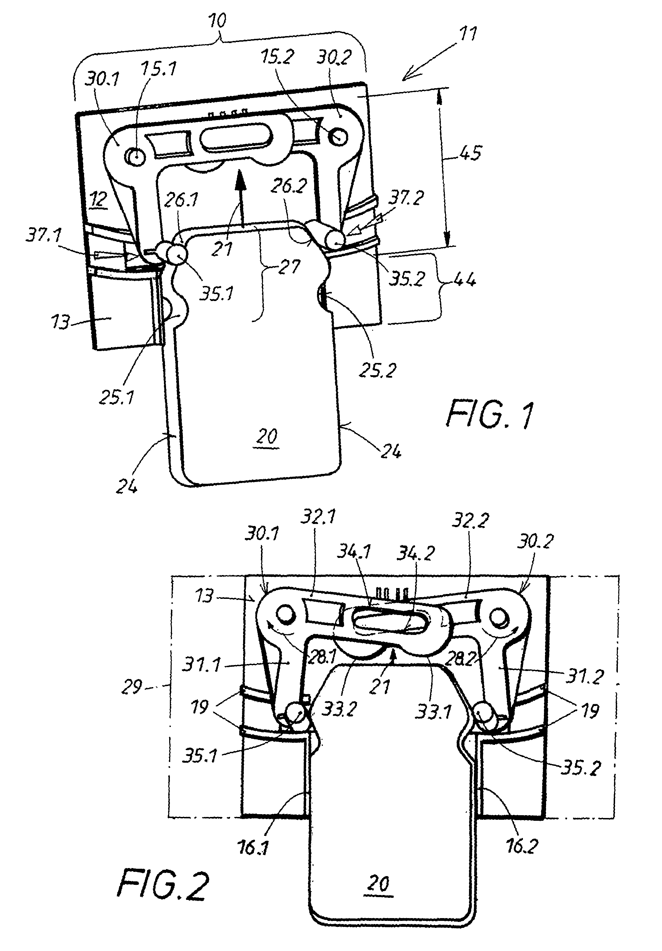

Die inneren Bauteile 11 umfassen eine Trägerplatte 12 an deren zur Aufnahme 10 hin weisenden Innenfläche 13 zwei Lagerzapfen 15.1, 15.2 angeordnet sind, die zur Schwenklagerung von zwei Winkelhebeln 30.1, 30.2 dienen. Die beiden Winkelhebel 30.1, 30.2 sind zwar zueinander formgleich ausgebildet, verlaufen aber in einer zueinander spiegelbildlichen Lage. Man kann also von einer einheitlichen Ausbildung eines Winkelhebels ausgehen, der dann auf der Trägerplatte 12 in zwei zueinander gewendeten Lagen 30.1, 30.2 verwendet wird. Die Winkelhebel 30.1, 30.2 haben den folgenden übereinstimmenden Aufbau, der anhand der Fig. 2 erläutert werden soll.

Der eine Arm 31.1, 31.2 des Winkelhebels 30.1, 30.2 verläuft im Wesentlichen in Einsteckrichtung 21 des ID-Gebers und soll aus folgendem Grund "Haltearm" bezeichnet werden. Der Haltearm 31.1, 31.2 besitzt nämlich an seinem Armende Gegenrastmittel 35.1, 35.2, die komplementär zu den vorbeschriebenen Rastmitteln 25.1, 25.2 des ID-Gebers 20 sind. Diese Gegenrastmittel bestehen im vorliegenden Fall aus jeweils einem Nocken 35.1, 35.2 am Armende.

Der andere Arm 32.1, 32.2 der beiden Winkelhebel 30.1, 30.2 verläuft dagegen im Wesentlichen quer zur Einsteckrichtung 21 des ID-Gebers 20 und soll aus folgendem Grund kurz "Steuerarm" bezeichnet werden. Die beiden Steuerarme 32.1, 32.2 überlappen sich endseitig und besitzen dort jeweils eine Steuerstelle 33.1, 33.2, die hier aus jeweils in Gegenrichtung zur Einsteckbewegung 21 des ID-Gebers 20 vorspringenden Nasen 33.1, 33.2 bestehen. Außerdem besitzen die beiden Steuerarme 32.1, 32.2 Durchbrüche 34.1, 34.2, die als "Sperrstellen" für einen aus Fig. 3 und 4 ersichtlichen Riegel 40 einer nicht näher gezeigten Sperreinrichtung dienen.

Beim Einsteckvorgang 21 hat die Innenfläche 13 der Trägerplatte 12 zugleich die Funktion einer Führungsfläche für den ID-Geber 20, weil sich dort die eine Breitseite 23 des ID-Gebers 20 abstützt. Weitere Führungsflächen für den ID-Geber 20 werden von zwei Führungsstegen 26.1, 26.2 gebildet, die auf der Platten-Innenfläche 13 emporragen und mit den beiden Seitenwänden 24 des ID-Gebers 20 zusammenwirken.

Die beiden Winkelhebel 30.1, 30.2 stehen unter der Wirkung von jeweils einer Federkraft 37.1, die durch einen Kraftpfeil in Fig. 1 veranschaulicht sind. Diese Federkräfte 37.1, 37.2 werden von einer aus Fig. 4 ersichtlichen gemeinsamen Zugfeder 17 erzeugt. Die Zugfeder 17 greift an zwei Zapfen 36.1, 36.2 der beiden Winkelhebel 30.1, 30.2 an, die an den freien Enden der beiden Haltearme 31.1, 31.2 angeformt sind. Die beiden Zapfen 36.1, 36.2 durchsetzen jeweils einen Ausschnitt 18 in der Trägerplatte 12 und ragen auf der in Fig. 4 erkennbaren Rückfläche 14 der Trägerplatte 12 heraus. Dort befindet sich auch die Zugfeder 17. Durch die Zugfeder 17 sind die beiden Winkelhebel 30.1, 30.2 im Gegensinne zueinander aufeinander zu federbelastet, wie aus den erwähnten Kraftpfeilen 37.1, 37.2 in Fig. 1 hervorgeht. Die beiden Ausschnitte 18 und die beiden Zapfen 26.1, 26.2 dienen auch als Endanschläge, die eine aus Fig. 1 ersichtliche Ruhestellung der beiden Winkelhebel 30.1, 30.2 bestimmen. Beim Einsteckvorgang 21 des ID-Gebers 20 durchlaufen die inneren Bauteile 11 fölgende Arbeitsphasen.

Die Fig. 1 zeigt, wie gesagt, die Ruhestellung der beiden Winkelhebel 30.1, 30.2 vor dem Einstecken des ID-Gebers 20. Wird der ID-Geber 20 gemäß Fig. 1 eingesteckt, so stoßen die an den Haltearm-Enden befindlichen Nocken 35.1, 35.2 gegen zueinander gegensinnig verlaufende Auflaufschrägen 26.1, 26.2, die sich am Einsteckende 27 des ID-Gebers 20 befinden. Beim weiteren Einstecken 21 des ID-Gebers 20 werden folglich die beiden Winkelhebel 30.1, 30.2 - entgegen ihren jeweiligen Federbelastungen 37.1, 37.2 - im Sinne der Drehpfeile 28.1, 28.2 von Fig. 2 voneinander weggeschwenkt. Die Fig. 2 zeigt also eine Zwischenphase der Schwenkbewegung 28.1, 28.2. Die Schwenkbewegung 28.1, 28.2 der beiden Winkelhebel 30.1, 30.2 vollzieht sich auf der bereits genannten Innenfläche 13 der Trägerplatte 12, welche somit die strichpunktiert in Fig. 2 verdeutlichte gemeinsame Schwenkebene 29 dieser Hebel 30.1, 30.2 bestimmt. Wie ersichtlich, verlaufen die Nocken 35.1, 35.2 im Wesentlichen senkrecht zu dieser Schwenkebene 29, was auch für die dazu gegensinnig orientierten Zapfen 36.1, 36.2 auf der Platten-Rückfläche 14 gemäß Fig. 4 gilt. Im vorliegenden Falle sind die Zapfen 36.1, 36.2 sogar in axialer Verlängerung der Nocken 35.1, 35.2 angeordnet.

Die volle Einstecklage des ID-Gebers 20 in den Bauteilen 11 ist in Fig. 3 gezeigt. Dabei sind die Nocken 35.1, 35.2 in die Vertiefungen 25.1, 25.2 des ID-Gebers 20 eingefahren. Für dieses Einfahren mögen zwar die in Fig. 1 beschriebenen Federkräfte 37.1, 37.2 sorgen, doch sind am vorderen Einsteckende 27 des ID-Gebers 20 vorgesehenen Gegensteuerstellen 38 maßgeblich. Diese Gegensteuerstellen 38 sind im vorliegenden Fall von der Stirnfläche 39 des ID-Gebers gebildet. Diese Gegensteuerflächen 38 wirken mit den vorbeschriebenen Nasen 33.1, 33.2 der Hebel-Steuerarme 32.1, 32.2 zusammen und sorgen für eine Zwangs-Rückschwenkung der beiden Winkelhebel 30.1, 30.2. Dann liegt die aus Fig. 3 und 4 ersichtliche Eingriffslage der Nocken 35.1, 35.2 in den Vertiefungen 25.1, 25.2 des ID-Gebers 20 vor.

Auch wenn die Feder 17 brechen sollte, bleibt die Erfindung voll funktionsfähig. Ursache dafür ist das vorerwähnte Zusammenspiel der Steuerstellen 33.1, 33.2 und der ihnen zugeordneten Gegensteuerstelle 38. So wird stets die gewünschte Einstecklage 43 des ID-Gebers erreicht. Die vorbeschriebene Eingriffslage der Nocken 35.1, 35.2 mit den Vertiefungen 25.1, 25.2 wird danach von dem bereits genannten Riegel 40 einer Sperreinrichtung in folgender Weise gesichert.

Normalerweise befindet sich der Riegel 40 in einer in Fig. 4 strichpunktiert verdeutlichten Stellung 40.1, die als "Freigabestellung" zu bezeichnen ist, weil sie die freie Schwenkbewegung 28.1, 28.2 der beiden Winkelhebel 30.1, 30.2 erlaubt. Die Schwenkbewegung 28.1, 28.2 kann auch durch Führungsbahnen 19 gefördert werden, die auf der Innenfläche 13 der Trägerplatte 12 sitzen. Diese Führungsbahnen 19 greifen an den Armenden der Haltearme 31.1, 31.2 an, wo auch die Nocken 35.1, 35.2 sitzen.

Wenn die aus Fig. 3 ersichtliche Eingriffslage der Nocken 35.1, 35.2 in den Vertiefungen 25.1, 25.2 des ID-Gebers 20 vorliegt, dann wird der Riegel 40 in seine durch Volllinien in Fig. 3 und 4 verdeutlichte Sperrstellung 40.2 überführt. Diese Umsteuerung zwischen den beiden Stellungen 40.1, 40.2 ist in den Fig. 3 und 4 durch einen Pfeil 41 veranschaulicht. Wie ersichtlich verläuft diese Umsteuerung 41 quer, insbesondere senkrecht zur strichpunktiert in Fig. 4 verdeutlichten, bereits erwähnten Schwenkebene 29 der beiden Winkelhebel 30.1, 30.2. Außerdem besitzt die Trägerplatte 12 einen aus Fig. 4 ersichtlichen Ausschnitt 42 für den Durchtritt des in seiner Sperrstellung 40.2 befindlichen Riegels. In der Sperrstellung von Fig. 3 und 4 sind die aus Fig. 2 ersichtlichen Durchbrüche 34.1, 34.2 der beiden Steuerarme 32.1, 32.2 in Deckung und erlauben so einen Eintritt des Riegels 40. Die Durchbrüche 34.1, 34.2 fluchten dann miteinander.

Die volle Einstecklage des ID-Gebers 20 in der Aufnahme ist in Fig. 3 durch die Hilfslinie 43 markiert. Die am eingefahrenen Riegel 40 wirkenden Kräfte hängen von den jeweiligen Längen des Steuerarms 32.1, 32.2 und Haltearms 31.1, 31.2 und ihrer Beziehung zueinander ab. Bei einem relativ langen Steuerarm 32.1, 32.2 und einem relativ kurzen Haltearm 31.1, 31.2 kann das Sperrmittel 40 verhältnismäßig klein ausgebildet sein.

In der Einstecklage 43 findet eine mono- oder bidirektionale Kommunikation des ID-Gebers 20 mit einem im Kraftfahrzeug angeordneten, nicht näher gezeigten ID-Nehmer statt. Ist diese Kommunikation erfolgreich, weil der richtige ID-Geber 20 eingesteckt worden ist, dann können durch Betätigen des ID-Gebers 20 oder einer dafür vorgesehenen Handhabe die verschiedenen Arbeitsstellungen zum Betrieb des Motors und Fahrzeugs eingeleitet werden. Wenn der in der Aufnahme steckende ID-Geber 20 selbst als Betätiger für die Arbeitsstellungen dient, z.B. als Drehhandhabe, dann fungiert er als sogenannter "Start-Stopp-Button". Im letztgenannten Fall, bei dafür vorgesehener getrennter Handhabe kann es sich um einen Dreh- oder Druckschalter handeln.

Zu diesen Arbeitsstellungen gehört z.B. eine sogenannte ACC-Stellung, wo nach erfolgreicher Identifikation eine Lenkradverriegelung beseitigt wird. Dann lässt sich das Lenkrad wieder drehen. Dann folgt eine RUN-Stellung, wo über einen SSB oder einen Startschalter Schaltelemente angesteuert werden, die den Motor starten und den ID-Geber 20 über den Riegel 40 verriegeln. Wenn der SSB los gelassen bzw. der Startschalter nicht mehr betätigt wird, stellen sich die Schaltelemente zurück, während der Motor gezündet bleibt. Um den Motor zu stoppen wird dann entweder wieder der Startschalter betätigt oder der SSB zurückgedreht. In diesem Fall wird der Riegel 40 in seine Freigabestellung 40.1 überführt, wodurch der ID-Geber 20 wieder zur Entnahme freigegeben ist. Wenn der ID-Geber entnommen ist, wird die Verriegelung des Lenkrads wirksam gesetzt.

Wie aus Fig. 1 zu erkennen ist, nehmen die zur Sicherung der Einstecklage des ID-Gebers 20 dienenden inneren Bauteile 11 nur eine verhältnismäßig geringe Bautiefe 45 ein, wenn man von dem vorausgehenden Führungsbereich 44 der Trägerplatte 12 absieht. Dieser Führungsbereich 44 könnte kürzer sein oder auch ganz entfallen. Durch die geringe Bautiefe 24 wird ein beachtlicher Raum eingespart, der für andere wichtige Funktionsteile im Kraftfahrzeug genutzt werden kann.

### Bezugszeichenliste :

- 10: Aufnahme für 20
- 11: innere Bauteile von 10
- 12: Trägerplatte
- 13: Innenfläche von 12, Führungsfläche für 20
- 14: Rückfläche von 12
- 15.1: Lagerzapfen für 30.1
- 15.2: Lagerzapfen für 30.2
- 16.1: erster Führungssteg für 24 von 20
- 16.2: zweiter Führungssteg für 24 von 20
- 17: Zugfeder
- 18: Ausschnitt
- 19: Führungsbahn für 31, 32 (Fig. 2)
- 20: ID-Geber
- 21: Steckrichtung von 20
- 22: Rechteckquerschnitt von 20 (Fig. 4)
- 23: Breitseite von 20 (Fig. 4)
- 24: Schmalseite von 20, Seitenwand (Fig. 4)
- 25.1: Rastmittel, Vertiefung an 24
- 25.2: Rastmittel, Vertiefung an 24
- 26.1: Auflaufschräge von 20 für 35.1
- 26.2: Auflaufschräge von 20 für 35.2
- 27: Einsteckende von 20 (Fig. 1)
- 28.1: Schwenkbewegung von 30.1
- 28.2: Schwenkbewegung von 30.2
- 29: Schwenkebene von 30.1, 30.2 (Fig. 2, 4)
- 30.1: erster Winkelhebel
- 30.2: zweiter Winkelhebel
- 31.1: erster Arm von 30.1, Haltearm
- 31.2: erster Arm von 30.2, Haltearm
- 32.1: zweiter Arm von 30.1, Steuerarm
- 32.2: zweiter Arm von 30.2, Steuerarm
- 33.1: Steuerstelle an 32.1, Nase
- 33.2: Steuerstelle an 32.2, Nase
- 34.1: Sperrstelle an 32.1, Durchbruch
- 34.2: Sperrstelle an 32.2, Durchbruch
- 35.1: Gegenrastmittel an 31.1, Nocken
- 35.2: Gegenrastmittel an 31.2, Nocken
- 36.1: Zapfen an 31.1 (Fig. 4)
- 36.2: Zapfen an 31.2 (Fig. 4)
- 37.1: Federkraft von 30.1 (Fig. 1)
- 37.2: Federkraft von 30.2 (Fig. 1)
- 38: Gegensteuerstelle für 33.1, 33.2 (Fig. 3)
- 39: Stirnfläche von 20 (Fig. 3)
- 40: Sperrmittel, Riegel der Sperreinrichtung (Fig. 3, 4)
- 40.1: Freigabestellung von 40 (Fig. 4)
- 40.2: Sperrstellung von 40 (Fig. 4)
- 41: Pfeil der Umsteuerung von 40 (Fig. 4)
- 42: Ausschnitt in 12 für 40 (Fig. 4)
- 43: Einstecklage von 20 (Fig. 3)
- 44: anfänglicher Führungsbereich für 20 (Fig. 1)
- 45: Kern-Bautiefe von 11 (Fig. 1)

## Patentansprüche

1. Vorrichtung zum Starten und zum Betrieb eines Motors in einem Kraftfahrzeug,
mit einem losen ID-Geber (20), der in eine ortsfeste Aufnahme (10) des Kraffahrzeugs einsteckbar (21) ist und wenigstens an seiner einen, in Einsteckrichtung (21) weisenden Seitenwand (24) ein Rastmittel (25.1, 25.2) besitzt,
mit einem ortsfesten ID-Nehmer im Kraftfahrzeug, der mit dem eingesteckten ID-Geber (20) kommuniziert,
und mit mindestens einem zweiarmigen Hebel (30.1, 30.2) in der Aufnahme (10), der einen Haltearm (31.1, 31.2) und einen Steuerarm (32.1, 32.2) besitzt,
wobei der Haltearm (31.1, 31.2) im Wesentlichen in Einsteckrichtung (21) des ID-Gebers (20) verläuft und ein Gegenrastmittel (35.1, 35.2) aufweist, welches in einer ordnungsgemäßen Einstecklage (43) des ID-Gebers (20) dessen Rastmittel (25.1, 25.2) erfasst und den ID-Geber (20) in der Aufnahme (10) festhält,
und der Steuerarm (32.1, 32.2) sowohl eine Steuerstelle (33.1, 33.2) für eine Schwenkbewegung (28.1, 28.2) des Hebels (30.1, 30.2) im Eingriffssinne der Rast- und Gegenrastmittel (25.1, 35.1; 25.2, 35.2) als auch eine Sperrstelle (34.1, 34.2) für eine Sperreinrichtung aufweist, welches den ID-Geber (20) in dessen Einstecklage (43) sichert,
**dadurch gekennzeichnet ,**
**dass** der Hebel ein ortsfest in der Aufnahme (10) schwenkgelagerter (15.1, 15.2) Winkelhebel (30.1, 30.2) ist, dessen Steuerarm (32.1, 32.2) quer zur Einsteckrichtung (21) des ID-Gebers (20) verläuft,
**dass** der ID-Geber (20) an seinem Einsteckende (27) eine Gegensteuerstelle (38) für die Steuerstelle (33.1, 33.2) vom Steuerarm (32.1, 32.2) besitzt
und **dass** das Sperrmittel (40) einer Sperreinrichtung quer zur Schwenkebene (29) des Steuerarms (32.1, 32.2) beweglich ist, zwischen einer an der Sperrstelle (34.1, 34.2) vom Steuerarm (32.1, 32.2) angreifenden Sperrstellung (40.2) und einer die Sperrstelle (34.1, 34.2) freigebenden Freigabestellung (40.1).

2. Vorrichtung nach Anspruch 1, **dadurch gekennzeichnet, dass** der ID-Geber (20) an seinen beiden, einander gegenüberliegenden Seitenwänden (24) je ein Rastmittel (25.1, 25.2) aufweist,
dass den beiden Rastmitteln (25.1, 25.2) zwei Gegenrastmittel (35.1, 35.2) an den Haltearmen (31.1, 31.2) von zwei Winkelhebeln (30.1, 30.2) zugeordnet sind,
dass die Steuerarme (32.1, 32.2) der beiden Winkelhebel (30.1, 30.2) einander überlappen
und dass in der Einstecklage (43) des ID-Gebers (20) die Sperrstellen (34.1, 34.2) der beiden Steuerarme (32.1, 32.2) fluchten und von dem gleichen Sperrmittel (40) in dessen Sperrstellung (40.2) erfasst sind.

3. Vorrichtung nach Anspruch 2, **dadurch gekennzeichnet, dass** die beiden Winkelhebel (30.1, 30.2) zwar formgleich ausgebildet sind, aber in einer zueinander spiegelbildlichen Lage verlaufen.

4. Vorrichtung nach einem oder mehreren der Ansprüche 1 bis 3, **dadurch gekennzeichnet, dass** das Rastmittel am ID-Geber (20) aus einer Vertiefung (25.1, 25.2) in der Seitenwand (24) und das Gegenrastmittel aus einem Nocken (35.1, 35.2) am freien Armende des Steuerarms (32.1, 32.2) vom Winkelhebel (30.1, 30.2) besteht.

5. Vorrichtung nach Anspruch 4, **dadurch gekennzeichnet, dass** der Nocken (35.1, 35.2) senkrecht zur Schwenkebene (29) des Winkelhebels (30.1, 30.2) verläuft.

6. Vorrichtung nach einem der Ansprüche 1 bis 5, **dadurch gekennzeichnet, dass** vor der Vertiefung (25.1, 25.2) in der Seitenwand (24) des ID-Gebers (20) eine Auflaufschräge (26.1, 26.2) für den Nocken (35.1, 35.2) angeordnet ist.

7. Vorrichtung nach einem der Ansprüche 1 bis 6, **dadurch gekennzeichnet, dass** die Gegensteuerstelle (38) vom Einsteckende (27) aus der Stirnfläche (39) des ID-Gebers (20) besteht.

8. Vorrichtung nach Anspruch 7, **dadurch gekennzeichnet, dass** die Steuerstelle vom Steuerarm (32.1, 32.2) des Winkelhebels (30.1, 30.2) aus einer Nase (33.1, 33.2) gebildet ist,
die in der Einstecklage (43) des ID-Gebers (20) sich an dessen Stirnfläche (39) abstützt.

9. Vorrichtung nach einem der Ansprüche 1 bis 8, **dadurch gekennzeichnet, dass** die Sperreinrichtung einen quer zur Schwenkebene (29) des Winkelhebels (30.1, 30.2) beweglichen Riegel (40) umfasst.

10. Vorrichtung nach einem der Ansprüche 1 bis 9, **dadurch gekennzeichnet, dass** die Sperrstelle aus einem Durchbruch (34.1, 34.2) im Steuerarm vom Winkelhebel (30.1, 30.2) besteht.

11. Vorrichtung nach Anspruch 9 oder 10, **dadurch gekennzeichnet, dass** in der Sperrstellung (40.2) der Riegel (40) in den Durchbruch (34.1, 34.2) eingreift,
während in der Freigabestellung (40.1) der Riegel (40) sich außerhalb des Durchbruchs (40.1, 40.2) befindet.

12. Vorrichtung nach einem der Ansprüche 1 bis 11, **dadurch gekennzeichnet, dass** der Winkelhebel (30.1, 30.2) auf einer Trägerplatte (12) schwenkgelagert (15.1, 15.2) ist, die parallel zu seiner Schwenkebene (29) verläuft.

13. Vorrichtung nach Anspruch 12, **dadurch gekennzeichnet, dass** die Trägerplatte (12) als innere Begrenzung für den ID-Geber (20) in der Aufnahme (10) dient.

14. Vorrichtung nach Anspruch 12 oder 13, **dadurch gekennzeichnet, dass** die Trägerplatte (12) das Einstecken (21) des ID-Gebers (20) bestimmende Führungsflächen (13; 16.1, 16.2) aufweist.

15. Vorrichtung nach Anspruch 14, **dadurch gekennzeichnet, dass** der ID-Geber (20) im Wesentlichen einen Rechteckquerschnitt (22) aufweist und die Führungsfläche (16) der Trägerplatte (12) an der einen Breitseite (23) des ID-Gebers (20) angreifen.

16. Vorrichtung nach Anspruch 15, **dadurch gekennzeichnet, dass** die Führungsflächen (16.1, 16.2) wenigstens bereichsweise an den Schmalseiten (24) des ID-Gebers (20) angreifen.

17. Vorrichtung nach einem der Ansprüche 12 bis 16, **dadurch gekennzeichnet, dass** die Trägerplatte (12) eine Führungsbahn (19) besitzt, auf der das Armende des Haltearms (31, 32) geführt ist, welcher das Gegenrastmittel (35.1, 35.2) trägt.

18. Vorrichtung nach einem der Ansprüche 1 bis 17, **dadurch gekennzeichnet, dass** der Winkelhebel (30.1, 30.2) eine Federbelastung (37.1, 37.2) aufweist, die bestrebt ist, das Gegenrastmittel (35.1, 35.2) vom Haltearm (31.1, 31.2) in das Rastmittel (25.1, 25.2) des ID-Gebers (20) zu drücken.

19. Vorrichtung nach Anspruch 18, **dadurch gekennzeichnet, dass** der Winkelhebel (30.1, 30.2) einen Zapfen (36.1, 36.2) aufweist, an dem die Federbelastung (37.1, 37.2) angreift.

20. Vorrichtung nach Anspruch 19, **dadurch gekennzeichnet, dass** der Zapfen (36.1, 36.2) für die Federbelastung (37.1, 37.2) am Haltearm (31.1, 31.2) des Winkelhebels (30.1, 30.2) sitzt.

21. Vorrichtung nach Anspruch 20, **dadurch gekennzeichnet, dass** der Zapfen (31.1, 31.2) einen Ausschnitt (18) in der Trägerplatte (12) durchsetzt
und dass die auf den Zapfen (36.1, 36.2) wirkende Federbelastung (37.1, 37.2) an der Rückfläche (14) der Trägerplatte (12) angeordnet ist.

22. Vorrichtung nach Anspruch 21, **dadurch gekennzeichnet, dass** der Zapfen (36.1, 36.2) im Wesentlichen in axialer Verlängerung des Nockens (35.1, 35.2) vom Haltearm (31.1, 31.2) angeordnet ist.

23. Vorrichtung nach einem der Ansprüche 18 bis 22, **dadurch gekennzeichnet, dass** den beiden Winkelhebeln (30.1, 30.2) eine gemeinsame Feder (17) zugeordnet ist
und dass die Feder (17) bestrebt ist, die beiden Haltearme (31.1, 31.2) gegeneinander zu drücken.

## Claims

1. Device for starting and operating an engine in a motor vehicle,
with an unattached ID transmitter (20), which can be plugged into a fixed receptacle (10) of the vehicle (21) and has at least one detent means (25.1, 25.2) on its sidewall (24) facing in the plug-in direction (21),
with a fixed ID receiver in the motor vehicle, which communicates with the plugged-in ID transmitter (20),
and with at least a two-arm lever (30.1, 30.2) in the receptacle (10), which has a retaining arm (31.1, 31.2) and a control arm (32.1, 32.2),
with the retaining arm (31.1, 31.2) running essentially in the plug-in direction (21) of the ID transmitter (20) and having a mating detent means (35.1, 35.2), which captures the detent means (25.1, 25.2) of the ID transmitter (20) when said ID transmitter (20) is in its correct plugged-in position (43), and which holds the ID transmitter (20) in the receptacle (10),
and with the control arm (32.1, 32.2) having both a control point (33.1, 33.2) for a swiveling movement (28.1, 28.2) of the lever (30.1, 30.2) in the engaging sense of the detent and mating detent means (25.1, 35.1; 25.2, 35.2) as well as a locking point (34.1, 34.2) for a locking device, which secures the ID transmitter (20) in its plugged in position (43),
**characterized in that**
the lever is a bellcrank lever (30.1, 30.2), which is permanently pivot-mounted (15.1, 15.2) in the receptacle (10) and with its control arm (32.1, 32.2) running transverse to the plug-in direction (21) of the ID transmitter (20),
the ID transmitter (20) has an opposite control point (38) on its plug-in end (27) for the control point (33.1, 33.2) of the control arm (32.1, 32.2)
and that the locking means (40) of a locking device can move transverse to the swivel plane (29) of the control arm (32.1, 32.2) between a locking position (40.2) engaging on the locking point (34.1, 34.2) of the control arm (32.1, 32.2) and a release position (40.1) releasing the locking point (34.1, 34.2).

2. Device according to Claim 1 can be **characterized in that** the ID transmitter (20) has a detent means (25.1, 25.2) on each of its two opposite sidewalls (24),
the two mating detent means (35.1, 35.2) on the retaining arms (31.1, 31.2) of two bellcrank levers (30.1, 30.2) are assigned to the two detent means (25.1, 25.2),
the control arms (32.1, 32.2) of the two bellcrank levers (30.1, 30.2) overlap each other
and that in the plugged-in position (43) of the ID transmitter (20) the locking points (34.1, 34.2) of the two control arms (32.1, 32.2) are aligned and are captured by the said locking means (40) in its locking position (40.2).

3. Device according to Claim 2, **characterized in that** although both bellcrank levers (30.1, 30.2) are of the same shape they operate in a mirror-image position relative to each other.

4. Device according to one or more of Claims 1 to 3, **characterized in that** the detent means on the ID transmitter (20) consists of a recess (25.1, 25.2) in the sidewall (24) and the mating detent means consists of a cam (35.1, 35.2) on the free end of the control arm (32.1, 32.2) of the bellcrank lever (30.1, 30.2).

5. Device according to Claim 4, **characterized in that** the cam (35.1, 35.2) runs vertically relative to the swivel plane (29) of the bellcrank lever (30.1, 30.2).

6. Device according to one of Claims 1 to 5,
**characterized in that** a run-chamfer (26.1, 26.2) for the cam (35.1, 35.2) is arranged in front of the recess (25.1, 25.2), in the sidewall (24) of the ID transmitter (20).

7. Device according to one of Claims 1 to 6,
**characterized in that** the opposite control point (38) of the plug-in end (27) consists of the front face (39) of the ID transmitter (20).

8. Device according to Claim 7, **characterized in that** the control point of the control arm (32.1, 32.2) of the bellcrank lever (30.1, 30.2) consists of a lug (33.1, 33.2),
which in the plugged-in position (43) of the ID transmitter (20) is supported on its front face (39).

9. Device according to one of Claims 1 to 8,
**characterized in that** the locking device includes a bolt (40) that can move transversely relative to the swivel plane (29) of the bellcrank lever (30.1, 30.2).

10. Device according to one of Claims 1 to 9,
**characterized in that** the locking point consists of an opening (34.1, 34.2) in the control arm of the bellcrank lever (30.1, 30.2).

11. Device according to Claim 9 or 10, **characterized in that** in the locking position (40.2) the bolt (40) engages in the opening (34.1, 34.2),
whereas in the released position (40.1) the bolt (40) is located outside of the opening (40.1, 40.2).

12. Device according to one of Claims 1 to 11,
**characterized in that** the bellcrank lever (30.1, 30.2) is swivel mounted (15.1, 15.2) on a carrier plate (12) that runs parallel to its swivel plane (29).

13. Device according to Claim 12, **characterized in that** the carrier plate (12) serves as an inner limit for the ID transmitter (20) in the receptacle (10).

14. Device according to Claim 12 or 13, **characterized in that** the carrier plate (12) has guide surfaces (13; 16.1, 16.2) that guide the insertion (21) of the ID transmitter (20).

15. Device according to Claim 14, **characterized in that** the ID transmitter (20) has an essentially rectangular cross section (22) and the guide surface (16) of the carrier plate (12) engages on a wide side (23) of the ID transmitter (20).

16. Device according to Claim 15, **characterized in that** the guide surfaces (16.1, 16.2) engage on the narrow sides (24) of the ID transmitter (20), at least in places.

17. Device according to one of Claims 12 to 16,
**characterized in that** the carrier plate (12) has a guide track (19) on which the arm end of the retaining arm (31, 32), which carries the mating detent means (35.1, 35.2), is guided.

18. Device according to one of Claims 1 to 17,
**characterized in that** the bellcrank lever (30.1, 30.2) has a spring loading (37.1, 37.2) which acts to press the mating detent means (35.1, 35.2) of the retaining arm (31.1, 31.2) into the detent means (25.1, 25.2) of the ID transmitter (20).

19. Device according to Claim 18, **characterized in that** the bellcrank lever (30.1, 30.2) has a spigot (36.1, 36.2) on which the spring loading (37.1, 37.2) acts.

20. Device according to Claim 19, **characterized in that** the spigot (36.1, 36.2) for the spring loading (37.1, 37.2) is seated on the retaining arm (31.1, 31.2) of the bellcrank lever (30.1, 30.2).

21. Device according to Claim 20, **characterized in that** the pin (31.1, 31.2) passes through a cutout (18) in the carrier plate (12),
and that the spring loading (37.1, 37.2) acting on the spigot (36.1, 36.2) is arranged on the back area (14) of the carrier plate (12).

22. Device according to Claim 21, **characterized in that** the spigot (36.1, 36.2) is essentially arranged as an axial extension of the cam (35.1, 35.2) of the retaining arm (31.1, 31.2).

23. Device according to one of Claims 18 to 22,
**characterized in that** a common spring (17) is assigned to both bellcrank levers (30.1, 30.2),
and that the spring (17) acts to press both retaining arms (31.1, 31.2) against each other.

## Revendications

1. Dispositif pour faire démarrer et faire fonctionner un moteur dans un véhicule automobile,
avec un émetteur d'ID (20) amovible, susceptible d'être enfiché (21) dans un logement (10) localement fixe du véhicule automobile et comprenant au moins un moyen d'encliquetage (25.1, 25.2), sur sa paroi latérale (24) tournée dans le sens d'enfichage (21),
avec un récepteur d'ID localement fixe, disposé dans le véhicule automobile, communiquant avec l'émetteur d'ID (20) enfiché,
et avec au moins un levier (30.1, 30.2) à deux bras, disposé dans le logement (10), comprenant un bras de maintien (31.1, 31.2) et un bras de commande (32.1, 32.2),
le bras de maintien (31.1, 31.2) s'étendant sensiblement dans le sens d'enfichage (21) de l'émetteur d'ID (20) et présentant un moyen conjugué d'enfichage (35.1, 35.2), qui, lorsque l'émetteur d'ID (20) se trouve en une position d'enfichage (43) conforme, saisit son moyen d'encliquetage (25.1, 25.2) et maintient l'émetteur d'ID (20) fixé dans le logement (10),
et le bras de commande (32.1, 32.2) présentant non seulement un emplacement de commande (33.1, 33.2) pour un mouvement de pivotement (28.1, 28.2) du levier (30.1, 30.2), dans le sens de la mise en prise des moyens d'encliquetage et d'encliquetage conjugué (25.1, 35.1 ; 25.2, 35.2), mais encore un emplacement de blocage (34.1, 34.2), pour un dispositif de blocage assurant l'émetteur d'ID (20) dans sa position d'enfichage (43),
**caractérisé**
**en ce que** le levier est un levier coudé (30.1, 30.2) monté à pivotement (15.1, 15.2) de façon localement fixe dans le logement (10), dont le bras de commande (32.1, 32.2) s'étend transversalement par rapport à la direction d'enfichage (21) de l'émetteur d'ID (20),
**en ce que** l'émetteur d'ID (20) comprend, à son extrémité d'enfichage (27) un emplacement de commande conjugué (38), pour l'emplacement de commande (33.1, 3.2) du bras de commande (32.1, 32.2),
et **en ce que** le moyen de blocage (40) est mobile dans une direction de blocage, transversalement au plan de pivotement (29) du bras de commande (32.1, 32.2), entre une position de blocage (40.2), agissant sur l'emplacement de blocage (34.1, 34.2), appartenant au bras de commande (32.1, 32.2), et une position de libération (40.1), libérant l'emplacement de blocage (34.1, 34.2).

2. Dispositif selon la revendication 1, **caractérisé en ce que** l'émetteur d'ID (20) présente, sur chacune de ses deux parois latérales (24) opposées entre-elles, un moyen d'encliquetage (25.1, 25.2),
**en ce que**, aux deux moyens d'encliquetage (25.1, 25.2), sont associés deux moyens d'encliquetage conjugués (35.1, 35.2), situés sur les bras de maintien (31.1, 31.2) des deux leviers coudés (30.1, 30.2),
les bras de commande (32.1, 32.2) des deux leviers coudés (30.1, 30.2) se chevauchent les uns les autres,
et **en ce que**, dans la position d'enfichage (43) de l'émetteur d'ID (20), les emplacements de blocage (34.1, 34.2) des deux bras de commande (32.1, 32.2) sont en alignement et sont saisis par le même moyen de blocage (40), placé dans sa position de blocage (40.2).

3. Dispositif selon la revendication 2, **caractérisé en ce que** les deux leviers coudés (30.1, 30.2) sont certes de forme identique, mais s'étendent en une position répondant mutuellement à une symétrie spéculaire.

4. Dispositif selon une ou plusieurs des revendications 1 à 3, **caractérisé en ce que** le moyen d'encliquetage disposé sur l'émetteur d'ID (20) est composé d'une cavité (25.1, 25.2) ménagée dans la paroi latérale (24), et le moyen d'encliquetage conjugué est composé d'un ergot (35.1, 35.2) disposé sur l'extrémité de bras libre du bras de commande (32.1, 32.2), appartenant au levier coudé (30.1, 30.2).

5. Dispositif selon la revendication 4, **caractérisé en ce que** l'ergot (35.1, 35.2) s'étend perpendiculairement au plan de pivotement (29) du levier coudé (30.1, 30.2).

6. Dispositif selon l'une des revendications 1 à 5, **caractérisé en ce qu'**une pente de franchissement (26.1, 26.2), pour l'ergot (35.1, 35.2), est disposé devant la cavité (25.1, 25.2) ménagée dans la paroi latérale (24) de l'émetteur d'ID (20).

7. Dispositif selon l'une des revendications 1 à 6,
**caractérisé en ce que** l'emplacement de commande conjugué (38) appartenant à l'extrémité d'enfichage (27) est composé de la face frontale (39) de l'émetteur d'ID (20).

8. Dispositif selon la revendication 7, **caractérisé en ce que** l'emplacement de commande appartenant au bras de commande (32.1, 32.2) du levier coudé (30.1, 30.2) est formé d'un nez (33.1, 33.2),
qui prend appui sur la face frontale (39) de l'émetteur d'ID (20), lorsque celui-ci se trouve dans la position d'enfichage (43).

9. Dispositif selon l'une des revendications 1 à 8,
**caractérisé en ce que** le dispositif de blocage comprend un verrou (40) mobile transversalement par rapport au plan de pivotement (29) du levier coudé (30.1, 30.2).

10. Dispositif selon l'une des revendications 1 à 9,
**caractérisé en ce que** l'emplacement de blocage est formé d'un passage (34.1, 34.2) ménagé dans le bras de commande appartenant au levier coudé (30.1, 30.2).

11. Dispositif selon la revendication 9 ou 10, **caractérisé en ce que**, dans la position de blocage (40.2), le verrou (40) s'engage dans le passage (34.1, 4.2),
tandis que, dans la position de libération (40.1), le verrou (40) se trouve hors du passage (34.1, 4.2).

12. Dispositif selon l'une des revendications 1 à 11, **caractérisé en ce que** le levier coudé (30.1, 30.2) est monté à pivotement (15.1, 15.2), sur une plaque support (12) s'étendant parallèlement à son plan de pivotement (29) .

13. Dispositif selon la revendication 12, **caractérisé en ce que** la plaque support (12) sert de limitation intérieure pour l'émetteur d'ID (20) placé dans le logement (10).

14. Dispositif selon la revendication 12 ou 13, **caractérisé en ce que** la plaque support (12) présente des surfaces de guidage (13 ; 16.1, 16.2) déterminant l'enfichage (21) de l'émetteur d'ID (20).

15. Dispositif selon la revendication 14, **caractérisé en ce que** l'émetteur d'ID (20) présente essentiellement une section transversale rectangulaire (22), et la surface de guidage (16) de la plaque support (12) agit sur un côté large (23) de l'émetteur d'ID (20).

16. Dispositif selon la revendication 15, **caractérisé en ce que** les surfaces de guidage (16.1, 16.2) agissent, au moins par zones, sur les côtés étroits (24) de l'émetteur d'ID (20).

17. Dispositif selon l'une des revendications 12 à 16, **caractérisé en ce que** la plaque support (12) comprend une piste de guidage (19), sur laquelle l'extrémité de bras du bras de maintien (31, 32), portant le moyen d'encliquetage conjugué (35.1, 35.2), est guidée.

18. Dispositif selon l'une des revendications 1 à 17, **caractérisé en ce que** le levier coudé (30.1, 30.2) présente une sollicitation élastique (37.1, 37.2), visant à presser le moyen d'encliquetage conjugué (35.1, 35.2), appartenant au bras de maintien (31.1, 31.2), dans le moyen d'encliquetage (25.1, 25.2) de l'émetteur d'ID (20).

19. Dispositif selon la revendication 18, **caractérisé en ce que** le levier coudé (30.1, 30.2) présente un téton (36.1, 36.2), sur lequel agit la sollicitation élastique (37.1, 37.2).

20. Dispositif selon la revendication 19, **caractérisé en ce que** le téton (36.1, 36.2) pour la sollicitation élastique (37.1, 37.2) siège sur le bras de maintien (31.1, 31.2) du levier coudé (30.1, 30.2).

21. Dispositif selon la revendication 20, **caractérisé en ce que** le téton (36.1, 36.2) traverse une découpure (18) ménagée dans la plaque support (12),
et **en ce que** la sollicitation élastique (37.1, 37.2), agissant sur le téton (36.1, 36.2), est disposée sur la face dorsale (14) de la plaque support (12).

22. Dispositif selon la revendication 21, **caractérisé en ce que** le téton (36.1, 36.2) est disposé sensiblement dans le prolongement axial de l'ergot (35.1, 35.2) appartenant au bras de maintien (31.1, 31.2).

23. Dispositif selon l'une des revendications 18 à 22, **caractérisé en ce qu'**un ressort (17) commun est associé aux deux leviers coudés (30.1, 30.2),
et **en ce que** le ressort (17) vise à presser l'un contre l'autre les deux bras de maintien (31.1, 31.2).
